# EUROPÄISCHE PATENTSCHRIFT

(11) **EP 1 781 483 B1**
(45) Veröffentlichungstag und Bekanntmachung des Hinweises auf die Patenterteilung: **07.05.2008**
(21) Anmeldenummer: 05777333.5
(22) Anmeldetag: 23.08.2005
(51) Int. Cl.: B60J 10/06, B60J 10/00

(54) **DICHTLEISTE FÜR RAHMENLOSE SEITENFENSTER VON KRAFTWAGEN**
SEALING STRIP FOR FRAMELESS SIDE WINDOWS ON MOTOR VEHICLES
BOURRELET D'ETANCHEITE POUR FENETRES LATERALES SANS CADRE DE VEHICULES AUTOMOBILES

(30) Priorität: 28.08.2004 DE 102004041741
(43) Veröffentlichungstag der Anmeldung: 09.05.2007
(73) Patentinhaber: Daimler AG, 70327 Stuttgart (DE)
(72) Erfinder: FÜTTERER, Michael, 71157 Hildrizhausen (DE)
(86) Internationale Anmeldenummer: PCT/EP2005/009080
(87) Internationale Veröffentlichungsnummer: WO 2006/024427

(56) Entgegenhaltungen:
- DE-A1- 4 203 364
- DE-C1- 10 055 897

## Beschreibung

Die Erfindung betrifft eine Dichtleiste für Seitenfenster von Kraftwagen nach dem Oberbegriff des Patentanspruch 1. Eine solche Dichtleiste ist aus der DE 10055897C bekannt.

Bei sportlichen Kraftwagen, die in Coupè-Form aufgebaut sind, ist es aus Designgründen häufig wünschenswert, dass die vordere und hintere Seitenscheibe möglichst nahe aneinander treffen. Insbesondere in den Fällen, in denen beim Aufbau des Fahrzeuges auf eine B-Säule im Bereich zwischen der Bordkante und dem Dachrahmen verzichtet wird, stellt sich häufig das Problem, die Seitenscheiben auch bei höheren Geschwindigkeiten fest im Dachrahmen zu führen.

In der DE 42 03 364 C2 ist ein Kraftwagen-Coupè dargestellt, das eine vordere und eine hintere Seitenscheibe aufweist. Die hintere Seitenscheibe versenkt sich hierbei in der hinteren Bordwand des Fahrzeuges. Eine hintere Tür ist hier nicht vorgesehen. Zwischen der vorderen und der hinteren Seite ist eine Dichtleiste angebracht, die an der hinteren Seitenscheibe befestigt ist und die eine Dichtung zur Aufnahme der vorderen Seitenscheibe aufweist. Im geschlossenen Zustand sind sowohl die vordere als auch die hintere Seitenscheibe, die im Übrigen ohne einen Türrahmen ausgestalten sind, durch die Dichtleiste und durch eine Dichtung im Dachrahmen abgedichtet. In diesem Fall ist jedoch die hintere Seitenscheibe relativ kurz. Bei 4-türigen Fahrzeugen, mit entsprechend langen hinteren Seitenscheiben kann diese Dichtungsanordnung insbesondere bei hohen Geschwindigkeiten unter Umständen nicht mehr ausreichend sein, um den Komfortansprüchen bezüglich Windgeräuschen gerecht zu werden.

Der Erfindung liegt die Aufgabe zu Grunde, eine Dichtung für Seitenfenster von Fahrzeugen der oben genannten Bauart bereitzustellen, wobei das Auftreten von Windgeräuschen gegenüber dem Stand der Technik reduziert wird.

Die Lösung der Aufgabe besteht in einer Dichtleiste für Seitenfenster von Kraftfahrzeugen mit den Merkmalen des Patentanspruchs 1.

Eine derartige Dichtleiste für Seitenscheiben von Kraftwagen ist zwischen einer versenkbaren rahmenlosen vorderen Seitenscheibe und einer versenkbaren rahmenlosen Fondseitenscheibe angeordnet. Die Dichtleiste reicht von einer Bordkante bis zu einem Dachrahmen des Kraftwagens. Die Dichtleiste zeichnet sich dadurch aus, dass an ihr ein bewegliches Arretierungsmittel angebracht ist, das in einem Schließzustand mit einem, am Dachrahmen angeordneten Arretierungsgegenstück im Eingriff steht.

Diese Anordnung bewirkt, dass die Seitenscheibe, an der die Dichtleiste mit Arretierungsmittel befestigt ist, fest mit dem Dachrahmen des Fahrzeuges arretiert ist. Dies bewirkt wiederum, dass die Zugkraft, die insbesondere bei hohen Geschwindigkeiten auf die Seitenscheiben wirkt und diese nach außen drückt, durch das Arretierungsmittel aufgenommen werden und somit eine Verringerung von Windgeräuschen herbeigeführt wird.

In einer Ausgestaltungsform ist die Dichtleiste an einer der vorderen Seitenscheiben zugewandten Seite der Fondseitenscheibe befestigt. Die Dichtleiste ist somit zwischen der Fondseitenscheibe und der vorderen Seitenscheibe an der Fondseitenscheibe befestigt. Hierin besteht der Vorteil, dass eine vordere Seitentür geöffnet werden kann, ohne vorher die Fondtür öffnen zu müssen. Insbesondere bei langen Fondseitenscheiben ist es vorteilhaft, das Arretierungsmittel auf die Fondseitenscheibe wirken zu lassen.

Umgekehrt kann es jedoch auch zweckmäßig sein, die Dichtleiste mit dem Arretierungsmittel an eine der Fondseitenscheibe zugewandten Seite der vorderen Seitenscheibe zu befestigen. Für den Betrachter von außen wird in diesem Fall kein Unterschied festellbar sein. Diese Variante kann dann zweckmäßig sein, wenn die vordere Seitenscheibe deutlich länger ausgestaltet ist als die Fondseitenscheibe.

Bei der Befestigung der Dichtleiste an einer der beiden Seitenscheiben ist es zweckmäßig, dass die Dichtleiste in ihrem Querschnitt ein U-Profil aufweist. Dieses U-Profil kann in seiner Längserstreckung um die Seitenscheibe gelegt werden und mit dieser vorteilhaft verklebt werden.

Hierbei kann es auch zweckmäßig sein, an dem U-Profil der Dichtleiste einen Schenkel anzuordnen, der ebenfalls in seiner Längserstreckung an der Dichtleite zur Aufnahme einer weiteren Dichtung dient. Die weitere Dichtung wiederum dichtet die Seitenscheibe ab, die nicht mit der Dichtleiste durch Verkleben in Verbindung steht.

In einer anderen Ausgestaltungsform kann es zweckmäßig sein, die Dichtleiste in Form eines H-Profils auszugestalten. Das H-Profil umfasst beide aufeinander treffenden Seitenscheiben, die vordere Seitenscheibe und die Fondseitenscheibe gleichermaßen. Diese Anordnung weist den Vorteil auf, dass beide Seitenscheiben von der Arretierung der Dichtleiste im Dachrahmen gehalten werden. Es bedarf hierbei jedoch einer aufwendigeren Mechanik bei der Öffnung der einzelnen Türen.

In einer Ausgestaltungsform ist das Arretierungsmittel in Form eines längs der Dichtleiste verlaufenden Arretierungsstiftes ausgestaltet. Hierbei wird unter "Stift" ein länglicher Gegenstand verstanden, der einen beliebigen Querschnitt aufweisen kann, wobei sich dessen Querschnitt über seine Länge zudem auch verändern kann. Dieser Arretierungsstift ist weiterhin bevorzugt in einem Hohlquerschnitt in der Dichtleiste angeordnet, wobei der Hohlquerschnitt der Dichtleiste über seine Länge hinweg als Führung für den Arretierungsstift dient. Außer zur sicheren Führung hat diese Anordnung des Arretierungsstiftes auch den Vorteil, dass er von außen nicht sichtbar ist, was optisch vorteilhaft ist.

Der Arretierungsstift greift in einem Fließzustand in einer Ausgestaltungsform der Erfindung in einer Öffnung im Dachrahmen ein. Dabei hat die Öffnung im Dachrahmen bevorzugt denselben Querschnitt wie der Arretierungsstift. Die Öffnung kann gegebenenfalls durch verstärkende Hülsen oder Platten verstärkt sein.

Aus Sicherheitsgründen ist es zweckmäßig, dass im Falle eines Unfalls und/oder bei einem Ausfall der Fahrzeugstromversorgung und/oder bei einer Störung einer Bordelektronik eine automatische Entarretierung des Arretierungsmittels erfolgt. Eine derartige automatische Entarretierung in einem Notfall ist insbesondere durch die Verwendung einer elektromagnetischen oder einer elektropneumatischen Betätigungsvorrichtung für das Arretierungsmittel möglich.

In einer weiteren Ausgestaltungsform der Erfindung ist es zweckmäßig, dass Führungsschienen für die Seitenscheiben, also für die vordere Seitenscheibe und für die Fondseitenscheibe in der Art bezüglich der Dichtleiste winklig angeordnet sind, dass beim Öffnen einer Scheibe diese sofort von ihrer Grenzlinie zur anderen Schreibe weggezogen wird. Hierdurch wird ein Verkanten beim Öffnen der Türen und der Fensterscheiben verhindert.

Weitere vorteilhafte Ausgestaltungsformen der Erfindung werden anhand der folgenden Figuren näher erläutert.

Dabei zeigen:
- Fig. 1: einen Ausschnitt aus einer Seitenansicht eines Kraftwagens mit einer vorderen Seitenscheibe und einer Fondseitenscheibe, die durch eine Dichtleiste getrennt sind,
- Fig. 2: ein Querschnitt durch die Dichtleiste entlang der Linie II in Figur 1,
- Fig. 3: einen Längsschnitt entlang der Dichtleiste entlang des Schnittes III in Figur 1 und
- Fig. 4: einen Querschnitt durch eine Dichtleiste entlang des Schnittes IV aus Figur 1.

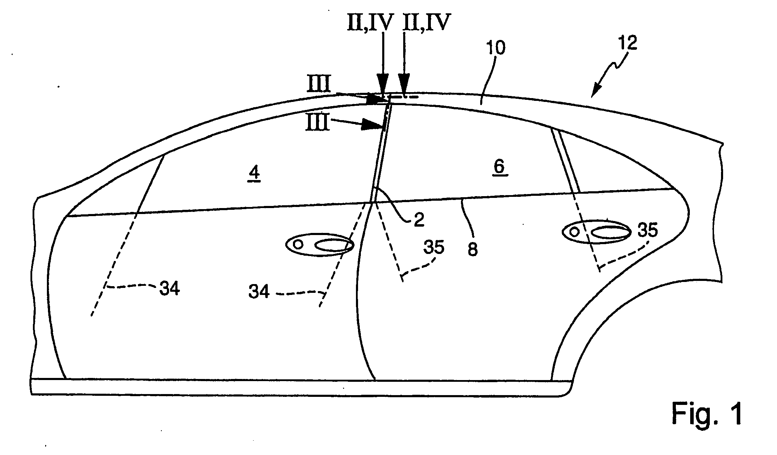

In Figur 1 ist die Seitenansicht eines Kraftwagens 12 dargestellt, wobei eine vordere Seitenscheibe 4, die in einer vorderen Tür 5 montiert ist auf eine Fondseitenscheibe 6 trifft, die in einer hinteren Tür 7 montiert ist. Dieses Fahrzeug weist zwar eine B-Säule auf, an der Türscharniere für die hintere Tür beziehungsweise Schließmechanismen für die vordere Tür befestigt sind, wobei diese B-Säule, in Figur 1 nicht sichtbar, lediglich bis zu einer Bordkante 8 reicht. Oberhalb der Bordkante 8 ist keine B-Säule zur Stützung der Seitenscheiben 4 und 6 vorhanden.

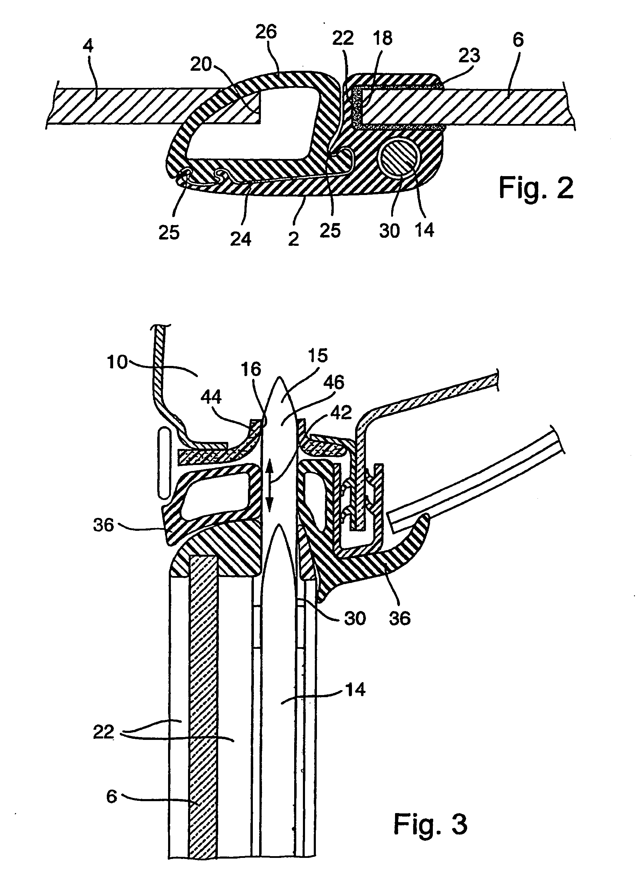

Die Seitenscheiben 4 und 6 sind in dieser Ausgestaltungsform rahmenlos ausgestaltet, sie sind, wie in Figur 2 durch den Querschnitt entlang der Schnittlinie 2 in Figur 1 dargestellt ist, durch eine Dichtleiste 2 voneinander getrennt. Hierbei ist in dieser Ausgestaltungsform die Dichtleiste 2 an der vorderen Seite 18 der Seitenscheibe 6 von einem U-Profil 22 umfasst, das wiederum einen Querschnittsbereich der Dichtleiste darstellt. Zwischen U-Profil 22 und der Fondseitenscheibe 6 verläuft eine Klebenaht 23, durch die die Dichtleiste an der Fondseitenscheibe 6 im Bereich 18 befestigt ist. Ebenso könnte das U-Profil 22 am Bereich 20 der vorderen Seitenscheibe 4 befestigt sein.

Des Weiteren weist die Dichtleiste 2 ausgehend von dem U-Profil 22 einen Schenkel 24 auf, der wiederum mit mehreren Hinterschneidungen 25 versehen ist, an denen einen Dichtung 26 geklemmt ist. Im Schließzustand der Steitenscheiben 4 und 6 liegt an der Dichtung 24 die vordere Seitenscheibe 4 an. Der Schenkel 24 ist so angeordnet, dass er im Querschnitt mit dem unteren Teil des U-Profils 22 ein "L" bildet.

Ferner weist die Dichtleiste 2 einen Hohlquerschnitt 30 auf, in der ein Arretierungsmittel in Form eines Arretierungsstiftes 14 geführt ist. Der Hohlquerschnitt 30 erstreckt sich entlang der Dichtleiste 2 und bildet somit eine Bohrung entlang der Dichtleiste 2. In Figur 3 ist die Art der Führung des Arretierungsstiftes 14 im Hohlquerschnitt 30 der Dichtleiste 2 dargestellt. Figur 3 zeigt eine hintere Seitenscheibe 6, die durch das U-Profil 22 umgeben ist. Im inneren Bereich der Dichtleiste 2 ist der Hohlquerschnitt 30 mit dem Arretierungsstift 14 angeordnet. Die Scheibe 6 liegt im geschlossenen Zustand an einer Dichtung im Dachrahmen 26 an und wird auch von dieser im Dachrahmenbereich geführt.

Durch den Pfeil 42 ist die Bewegungsrichtung des Arretierungsstift 14 dargestellt. Dieser bewegt sich entlang des Hohlquerschnittes 30 durch eine Öffnung 16 im Dachrahmen und verriegelt/arretiert somit die Dichtleiste 2, die wiederum an der Seitenscheibe 6 befestigt ist am Dachrahmen 10 (Arretierungsposition 46). Zur besseren Verfestigung der Arretierung ist die Öffnung 16 durch eine Verstärkungshülse 44 verstärkt, beziehungsweise wird durch diese ausgebildet. Der Arretierungsstift 14 weist zur besseren Einfädelung in die Öffnung 16 eine konisch zulaufende Spitze 15 auf.

Grundsätzlich kann der Arretierungsstift 14 verschiedene Querschnitte aufnehmen. Ein runder Querschnitt ist jedoch in der Praxis zweckmäßig. Neben dem beschriebenen Arretierungsstift 14 können auch weitere Arretierungsmittel zweckmäßig sein. Beispielsweise kann an der Dichtleiste 2 ein Haken angeordnet sein, der durch einen Klappmechanismus in einer Öse am Dachrahmen eingreift. Der hier näher beschriebene Arretierungsstift 14 lässt sich jedoch einfach mechanisch betätigen und ist in seiner Ausgestaltung kostengünstig. Ebenfalls aus Kostengesichtspunkten ist die Dichtleiste bevorzugt durch ein Aluminiumstrangpressprofil dargestellt. Andere Herstellerverfahren wie Blechumformung sind zur Herstellung der Dichtleiste 2 ebenfalls denkbar.

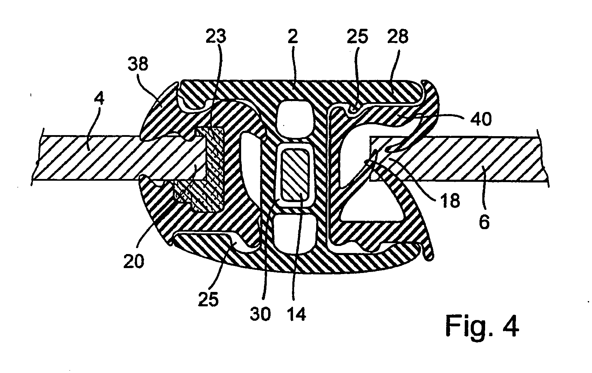

In einer weiteren Ausgestaltungsform der Erfindung nach Figur 4 ist die Dichtleiste 2 in Form eines H-Profils ausgestaltet. Somit wird entgegen der Figur 2 nicht nur eine Seitenscheibe durch ein U-Profil umfasst, sondern sowohl die vordere Seitenscheibe 4 als auch die Fondseitenscheibe 6 durch jeweils ein U-Profil, die zusammen ein H-Profil ergeben, eingebettet. In dieser Ausgestaltungsform ist die vordere Seitenscheibe 4 im Bereich 20 in eine Dichtung 38 eingeklebt, die wiederum durch Hinterschneidungen 25 an der Dichtleiste 2 befestigt ist. Im Gegensatz zu Figur 2 ist in dieser Ausgestaltungsform die Dichtleiste somit fest mit der vorderen Seitenscheibe 4 verbunden, wogegen die Fondseitenscheibe 6 frei in die Dichtung 40 des H-Profils eingreift und von dieser lösbar ist.

Auch die Dichtleiste 2 in Figur 4 weist einen Hohlquerschnitt 30 auf, der in dieser Ausgestaltungsform in dem Steg des "H" angeordnet ist. In diesen Hohlquerschnitt 30 ist ebenfalls ein Arretierungsstift 14 geführt, der in diesem Ausführungsbeispiel einen rechteckigen Querschnitt mit abgerundeten Kanten aufweist.

Zur Betätigung des Arretierungsmittels, in diesem Beispiel des Arretierungsstiftes 14, können grundsätzlich alle geeigneten Vorrichtungen angewendet werden. Als vorteilhaft haben sich elektromagnetische und elektropneumatische Antriebe herausgestellt. Hierbei weist ein elektromagnetischer Antrieb den Vorteil auf, dass auf den Aufbau von Druckluft verzichtet werden kann. Zur Realisierung der Antriebsvorrichtung kann beispielsweise ein, hier nicht dargestellter, Elektromagnet im Dachrahmen angeordnet sein.

Durch Überwindung eines, ebenfalls nicht dargestellten Federmechanismuses wird in einem Schließzustand der Seitenscheiben der Arretierungsstift 14 unter Überwindung der Federkraft durch den Elektromagneten in die Öffnung 30 des Dachrahmen gezogen. Solange die Spannung am Elektromagneten anliegt, wird der Arretierungsstift 14 in der Arretierungsposition 46 gehalten. Somit ist die Dichtleiste 2 fest am Dachrahmen arretiert. Diese Verriegelung/Arretierung wirkt der Neigung der Seitenscheiben entgegen, bei hohen Fahrtgeschwindigkeiten durch den Unterdruck, der durch den Fahrtwind gebildet wird nach außen gezogen zu werden. Windgeräusche werden durch diese Verriegelung nachhaltig reduziert.

Zur Sicherung der Insassen bei einem Unfall ist die Arretierungsvorrichtung in der Art gesteuert, dass beim Eintreten eines Unfalls einem Arretierungsbetätigungsmittel, beispielsweise dem Elektromagnet die Spannung entzogen wird und dieser den Arretierungsstift 14 frei gibt. Über die Federkraft wird der Arretierungsstift 14 zurück in den Hohlquerschnitt 30 der Dichtleiste 2 geschoben. Somit ist die Arretierung aufgehoben und die Tür frei öffenbar. Hierbei ist es zweckmäßig, dass Crashsensoren, die im Fahrzeug vorhanden sind und für die Steuerung von Airbags vorgesehen sind, ebenfalls die Steuerung der Entarretierung übernehmen. Somit kann gewährleistet werden, dass in einem Crashfall die Entarretierung sicher erfolgt. Auch in anderen Notsituationen beispielsweise bei einem Ausfall des Bordnetzes beziehungsweise bei einem Stromausfall, wäre so garantiert, dass eine Entarretierung des Arretierungsmittels erfolgt.

Zur vorteilhaften Öffnung der Fenster 4, 6 beziehungsweise der dazugehörigen Türen des Kraftwagens ist es zweckmäßig, dass Führungsschienen 34 (vgl. Figur 1) so angeordnet sind, dass die Seitenscheiben 4, 6 beim Öffnen der Fenster zunächst voneinander weggezogen werden. Hiermit kann ein Verkanten zwischen den beiden Seitenscheiben 4, 6 verhindert werden. Die Führungsschienen 34 in der vorderen Tür sind somit in einem stumpfen Winkel zur Dichtleiste 2 in Richtung der Vorderseite des Fahrzeuges angeordnet. Beim Versenken der vorderen Seitenscheibe 4 wird diese leicht in Richtung Fahrzeugvorderseite gezogen und somit von der hinteren Seitenscheibe 6 entfernt. Analog hierzu wird die Fondseitenscheibe 6 durch die Führungsscheinen 35 in Richtung des Fahrzeughecks gezogen um eine Verkantung mit der vorderen Seitenscheibe 4 beim Versenken zu verhindern.

Bei Öffnen und Schließen der Türen beziehungsweise der Seitenscheiben 4, 6 kann es unter Umständen zweckmäßig sein, eine so genannte Kurzhubsteuerung der Seitenscheiben 4, 6 einzustellen. Hierbei kann beispielsweise bei der Betätigung des Türgriffs eine einzelne oder beide Seitenscheiben 4, 6 je nach Anforderung und Bauform kurz bis zu einem bestimmten Grade versenkt werden um beispielsweise die Arretierung oder eine Verkantung der Dichtleiste 2 zu unterbinden. Ferner können die Seitenscheiben 4, 6 nach Beendigung des Öffnungsbeziehungsweise Schließvorganges sofort wieder in ihre Ausgangsposition zurückgefahren werden. Derartige kurzhubige Öffnungs- und Schließvorgänge erfolgen vorprogrammiert und automatisch bei Betätigung der Entriegelung beziehungsweise Verriegelung der Fahrzeugtüren 5, 8.

Eine derartige Kurzhubsteuerung kann insbesondere bei der Anwendung einer Dichtleiste nach Figur 4 zweckmäßig sein, da hier im Gegensatz zur Dichtleiste nach Figur 2 beide Seitenscheiben 4, 6 durch die Dichtleiste in Verbindung mit dem Arretierungsmittel arretiert sind. Die Dichtleiste nach Figur 4 erfordert einen höheren mechanischen Aufwand bei der Öffnung der Fensterscheiben beziehungsweise bei der Öffnung der Türen, durch diese Anordnung werden jedoch die Fensterscheiben besonders gut mit der Fahrzeugkarosserie arretiert, was die Reduktion von Windgeräuschen besonders begünstigt. Diese Anordnung ist insbesondere beim sehr langen, großen und schweren Seitenscheiben 4, 6 zweckmäßig. Die Dichtleiste nach Figur 4 kann zwar schmal ausgestaltet sein, sie ist jedoch von außen sichtbar, was aus Designgründen nicht immer wünschenswert ist. Die Dichtleiste 2 nach Figur 2 ist von außen kaum sichtbar und sie erlaubt ein leichtes Schließen und Öffnen der Türen 5, 7 beziehungsweise der Seitenscheiben 4, 6.

Im Allgemeinen kann die vordere Seitenscheibe 4 auch ausreichend gut in Dichtungen, die im Dachrahmen des Kraftwagens angeordnet sind, geführt werden. Somit bedarf es daher häufig keiner weitern Verriegelung für die vordere Seitenscheibe 4. Sollte dies jedoch im Einzelfall doch notwendig sein, kann ein weiteres Arretierungsmittel vorgesehen sein, das die Seitenscheibe, an der die Dichtleiste 2 nicht befestigt ist, zusätzlich arretiert. Ein solches Arretierungsmittel kann beispielsweise in Form eines flachen, blechartigen Riegels ausgestaltet sein der im oberen Bereich der betroffenen Seitenscheibe ausgehend von der Dichtleiste 2 beziehungsweise ausgehend vom Dachrahmen 10 mit einem kurzen Überdeckungsbereich über die betroffene Seitenscheibe 4 oder 6 geschoben wird. Auch bei einer derartigen zusätzlichen Verriegelungsmaßnahme ist selbstverständlich eine Notentriegelung für den Arretierungsbolzen 14 vorgesehen.

## Patentansprüche

1. Dichtleiste für Seitenscheiben von Kraftwagen, welche im montierten Zustand zwischen einer versenkbaren rahmenlosen vorderen Seitenscheibe (4) und einer versenkbaren rahmenlosen Fondseitenscheibe (6) angeordnet ist und von einer Bordkante (8) zu einem Dachrahmen (10) des Kraftwagens (12) verläuft,
**dadurch gekennzeichnet,**
**dass** an der Dichtleiste (2) ein bewegliches Arretierungsmittel angebracht ist, das in einem Schließzustand bei montierter Dichtleiste mit einem am Dachrahmen (10) angeordneten Arretierungsgegenstück im Eingriff steht.

2. Dichtleiste nach Anspruch 1,
**dadurch gekennzeichnet,**
**dass** die Dichtleiste (2) an einer der vorderen Seitenscheibe (4) zugewandten Seite (18) der Fondseitenscheibe (6) befestigbar ist.

3. Dichtleiste nach Anspruch 1,
**dadurch gekennzeichnet,**
**dass** die Dichtleiste (2) an einer der Fondseitenscheibe (6) zugewandten Seite (20) der vorderen Seitenscheibe (4) befestigbar ist.

4. Dichtleiste nach einem der Ansprüche 1 bis 3,
**dadurch gekennzeichnet,**
**dass** die Dichtleiste (2) ein U-Profil (22) zur Befestigung der Dichtleiste an einer der beiden Seitenscheiben (4, 6) aufweist.

5. Dichtleiste nach Anspruch 3,
**dadurch gekennzeichnet**
**dass** die Dichtleiste (2) in ihrem Querschnitt einen Schenkel (24) aufweist, an dem eine entlang der Dichtleiste (2) verlaufende Dichtung (26) befestigt ist.

6. Dichtleiste nach einem der Ansprüche 1 bis 3,
**dadurch gekennzeichnet,**
**dass** die Dichtleiste (2) ein H-Profil (28) aufweist, das im montierten Zustand beide Seitenscheiben (4, 6) an deren aufeinanderzeigenden Seiten (18, 20) umgreift.

7. Dichtleiste nach einem der vorhergehenden Ansprüche,
**dadurch gekennzeichnet,**
**dass** das Arretierungsmittel in Form eines längs der Dichtleiste verlaufenden Arretierungsstiftes (14) ausgestaltet ist.

8. Dichtleiste nach Anspruch 7,
**dadurch gekennzeichnet,**
**dass** der Arretierungsstift (14) in einem Hohlquerschnitt (30) der Dichtleiste (2) angeordnet ist.

9. Dichtleiste nach Anspruch 8,
**dadurch gekennzeichnet**
**dass** der Arretierungsstift (14) entlang einer Längsausdehnung der Dichtleiste beweglich ist.

10. Dichtleiste nach einem der Ansprüche 7 bis 9,
**dadurch gekennzeichnet,**
**dass** der Arretierungsstift (14) im Schließzustand in eine Öffnung (16) im Dachrahmen eingreift.

11. Dichtleiste nach einem der vorhergehenden Ansprüche,
**dadurch gekennzeichnet**
**dass** im Falle eines Unfalls und/oder bei einem Ausfall der Fahrzeugstromversorgung und/oder bei einer Störung einer Bordelektronik eine automatische Entarretierung des Arretierungsmittels erfolgt.

12. Dichtleiste nach einem der vorhergehenden Ansprüche,
**dadurch gekennzeichnet**
**dass** die Arretierung des Arretierungsmittels durch eine elektromagnetische und/oder durch eine elektropneumatische Vorrichtung erfolgt.

13. Dichtleiste nach einem der vorhergehenden Ansprüche,
**dadurch gekennzeichnet**
**dass** Führungsschienen (34) der vorderen Seitenscheibe in einem stumpfen Winkel zur montierten Dichtleiste (2) in Richtung Fahrzeugfront verlaufen.

14. Dichtleiste nach einem der vorhergehenden Ansprüche,
**dadurch gekennzeichnet**
**dass** Führungsschienen (35) der Fondseitenscheibe in einem stumpfen Winkel zur montierten Dichtleiste (2) in Richtung Fahrzeugheck verlaufen.

## Claims

1. Sealing strip for side windows of motor vehicles, which in the fitted condition is arranged between a frameless front lateral window-pane (4) that can be lowered and a frameless rear lateral window-pane (6) that can be lowered and which extends from a sill edge (8) to a roof frame (10) of the motor vehicle (12),
**characterised in that**
a movable detent means is attached to the sealing strip (2), which in a closed condition when the sealing strip is fitted, engages with a complementary detent element arranged on the roof frame (10).

2. Sealing strip according to Claim 1,
**characterised in that**
the sealing strip (2) can be fixed onto an edge (18) of the rear lateral window-pane (6) that faces towards the front lateral window-pane (4).

3. Sealing strip according to Claim I,
**characterised in that**
the sealing strip (2) can be fixed onto an edge (20) of the front lateral window-pane (4) that faces towards the rear lateral window-pane (6).

4. Sealing strip according to any of Claims I to 3,
**characterised in that**
cross-section of the sealing strip (2) is U-shaped, enabling the sealing strip to be fitted on one of the two lateral window-panes (4, 6).

5. Sealing strip according to Claim 3,
**characterised in that**
the cross-section of the sealing strip comprises a sidepiece (24) on which is fixed a seal (26) that runs along the sealing strip (2).

6. Sealing strip according to any of Claims 1 to 3,
**characterised in that**
the cross-section of the sealing strip (2) is H-shaped (28), so that in the fitted condition the strip extends round both lateral window-panes (4, 6) along their respective edges (18, 20).

7. Sealing strip according to any of the preceding claims,
**characterised in that**
the detent means is designed in the form of a detent pin (14) that extends along the sealing strip.

8. Sealing strip according to Claim 7,
**characterised in that**
the detent pin (14) is arranged in a hollow cross-section (30) of the sealing strip (2).

9. Sealing strip according to Claim 8,
**characterised in that**
the detent pin (14) can be moved along a longitudinal extension of the sealing strip.

10. Sealing strip according to any of Claims 7 to 9,
**characterised in that**
in the closed condition the detent pin (14) engages in an opening (16) in thr roof frame.

11. Sealing strip according to any of the preceding claims,
**characterised in that**
in the event of an accident and/or if the vehicle's electric power supply system fails and/or if an on-board electronic system becomes faulty, the detent means is automatically released.

12. Sealing strip according to any of the preceding claims,
**characterised in that**
the detent means are engaged by an electromagnetic and/or electro-pneumatic device.

13. Sealing strip according to any of the preceding claims,
**characterised in that**
guide-rails (34) of the front lateral window-pane extend at an obtuse angle to the fitted sealing strip (2) in the direction towards the front of the vehicle.

14. Sealing strip according to any of the preceding claims,
**characterised in that**
guide-rails (35) of the rear lateral window-pane extend at an obtuse angle to the fitted sealing strip (2) in the direction towards the rear of the vehicle.

## Revendications

1. Bordure d'étanchéité pour vitres latérales de véhicules, disposée à l'état monté entre une vitre latérale avant (4) sans cadre escamotable et une vitre latérale arrière (6) sans cadre escamotable, et s'étendant d'un bord (8) à un cadre de toit (10) du véhicule (12), **caractérisée en ce qu'**un moyen d'arrêt mobile est placé au niveau de la bordure d'étanchéité (2), ledit moyen entrant en prise avec une contre-pièce d'arrêt disposée au niveau du cadre de toit (10), dans une position de fermeture, lorsque la bordure d'étanchéité est montée.

2. Bordure d'étanchéité selon la revendication 1, **caractérisée en ce que** la bordure d'étanchéité (2) peut être fixée au niveau d'un côté (18) de la vitre latérale arrière (6) tourné vers la vitre latérale avant (4).

3. Bordure d'étanchéité selon la revendication 1, **caractérisée en ce que** la bordure d'étanchéité (2) peut être fixée au niveau d'un côté (20) de la vitre latérale avant (4) tourné vers la vitre latérale arrière (6).

4. Bordure d'étanchéité selon l'une quelconque des revendications 1 à 3, **caractérisée en ce que** la bordure d'étanchéité (2) présente un profil en U (22) permettant de fixer la bordure d'étanchéité au niveau d'une des deux vitres latérales (4, 6).

5. Bordure d'étanchéité selon la revendication 3, **caractérisée en ce que** la bordure d'étanchéité (2) présente dans sa section transversale une branche (24) au niveau de laquelle est fixé un joint d'étanchéité (26) s'étendant le long de la bordure d'étanchéité (2).

6. Bordure d'étanchéité selon l'une quelconque des revendications 1 à 3, **caractérisée en ce que** la bordure d'étanchéité (2) présente un profil en H (28), qui à l'état monté enveloppe les deux vitres latérales (4, 6) au niveau de leurs côtés (18, 20) tournés l'un vers l'autre.

7. Bordure d'étanchéité selon l'une quelconque des revendications précédentes, **caractérisée en ce que** le moyen d'arrêt est conçu sous la forme d'une tige d'arrêt (14) s'étendant le long de la bordure d'étanchéité.

8. Bordure d'étanchéité selon la revendication 7, **caractérisée en ce que** la tige d'arrêt (14) est disposée dans une section creuse (30) de la bordure d'étanchéité (2).

9. Bordure d'étanchéité selon la revendication 8, **caractérisée en ce que** la tige d'arrêt (14) est mobile le long d'une étendue longitudinale de la bordure d'étanchéité.

10. Bordure d'étanchéité selon l'une quelconque des revendications 7 à 9, **caractérisée en ce que** la tige d'arrêt (14), à l'état de fermeture, s'engage dans une ouverture (16) dans le cadre du toit.

11. Bordure d'étanchéité selon l'une quelconque des revendications précédentes, **caractérisée en ce que** dans le cas d'un accident et/ou d'un défaut d'alimentation électrique du véhicule et/ou d'une panne d'un dispositif électronique de bord, un déblocage automatique du moyen d'arrêt se produit.

12. Bordure d'étanchéité selon l'une quelconque des revendications précédentes, **caractérisée en ce que** l'arrêt du moyen d'arrêt est réalisé par l'intermédiaire d'un dispositif électromagnétique et/ou électropneumatique.

13. Bordure d'étanchéité selon l'une quelconque des revendications précédentes, **caractérisée en ce que** des rails de guidage (34) de la vitre latérale avant s'étendent selon un angle obtus par rapport à la bordure d'étanchéité montée (2) en direction de l'avant du véhicule.

14. Bordure d'étanchéité selon l'une quelconque des revendications précédentes, **caractérisée en ce que** des rails de guidage (35) de la vitre latérale arrière s'étendent selon un angle obtus par rapport à la bordure d'étanchéité montée (2) en direction de l'arrière du véhicule.
